**Europäisches Patentamt**

**European Patent Office**

**Office européen des brevets**

(11) Publication number: **0 112 583**

**B1**

(12) **EUROPEAN PATENT SPECIFICATION**

(45) Date of publication of patent specification: **12.08.87**

(21) Application number: **83113152.9**

(22) Date of filing: **27.12.83**

(51) Int. Cl.⁴: **H 04 N 5/84,** H 04 N 1/06, H 04 N 1/12

(54) **Exposure device for hard-copy.**

(30) Priority: **27.12.82 JP 226555/82**
**27.12.82 JP 226556/82**
**27.12.82 JP 226557/82**
**27.12.82 JP 226558/82**

(43) Date of publication of application:
**04.07.84 Bulletin 84/27**

(45) Publication of the grant of the patent:
**12.08.87 Bulletin 87/33**

(84) Designated Contracting States:
**DE FR GB**

(56) References cited:
**DE-A-2 948 369**
**DE-A-3 033 892**
**DE-B-2 333 587**
**GB-A-2 110 036**
**US-A-4 112 459**
**US-A-4 167 024**

(73) Proprietor: **FUJI PHOTO FILM CO., LTD.**
**210 Nakanuma Minami Ashigara-shi**
**Kanagawa 250-01 (JP)**

(72) Inventor: **Kazuhiko, Yanagihara**
**c/o Fuji Ltd. No. 798 Miyanodai, Kaisei-cho**
**Ashigarakami-gun Kanagawa-ken (JP)**
Inventor: **Masahiro, Ohnishi**
**c/o Fuji Ltd. No. 798 Miyanodai, Kaisei-cho**
**Ashigarakami-gun Kanagawa-ken (JP)**
Inventor: **Shigeo, Harada**
**c/o Fuji Ltd. No. 798 Miyanodai, Kaisei-cho**
**Ashigarakami-gun Kanagawa-ken (JP)**
Inventor: **Nobumitsu, Takehara**
**c/o Fuji Ltd. No. 798 Miyanodai, Kaisei-cho**
**Ashigarakami-gun Kanagawa-ken (JP)**

(74) Representative: **Henkel, Feiler, Hänzel & Partner**
**Möhlstrasse 37**
**D-8000 München 80 (DE)**

Courier Press, Leamington Spa, England.

## Description

The present invention relates to an exposure device for printing out a hard-copy of picture images of a higher quality from video signals of TV or the like, and it more particularly relates to scanning means, a signal transmission means and a power transmission means suitable for such an exposure device.

Video images on TV can be easily printed out in hard-copy such as a sheet of paper or a film by taking pictures of such images on a picture tube by a camera. For better picture quality, however, it is desirable to control a light-emitting diode or a laser diode with three types of color signals such as R, G, B, which are obtained from video signals, to scan and expose a color photo-sensitive material with the output light therefrom, and to develop and fix the images as a hard-copy. Luminance signals are used for monochromatic copies.

What is most critical in those systems are the control over the amount of exposure light per picture element and the scanning mechanism.

In such a scanning mechanism, light may be deflected into main scanning and auxiliary scanning directions. But that would not be practical as it makes the device complicated and bulky, nor desirable from the viewpoint of resolution and attenuation of the light. It is, therefore, more preferable to use mechanical scanning which conducts main scanning by rotating a light-emitting device for exposure, such as a light-emitting diode or a laser diode, and auxiliary scanning by moving at least one of the light emitters for exposure and the photo-sensitive material in the rotating axial direction. However, the rotation of the light emitter for exposure will bring forth the problem of how to transmit control signals free of contact. The contacting type using slidable rings is not satisfactory in reliability as it has shorter life time and causes noise. Electrical or magnetic radio type, on the other hand, may often be troubled with induced noise. Such problems can be obviated if control signals are converted from electrical signals into optical signals, transmitted in optical coupling and then converted again into electrical signals.

For controlling the exposure light per picture element, it is conceivable to use a system which amplifies color signals (luminance signals in the case of monochromatic ones) so as to modulate the intensity of light emitted from the light emitter for exposure. However, this system is not suitable for hard-copies of high quality picture images since the correspondence between the color signal and the color density of light-sensitive material is complicated and troublesome with an analogue processing due to the non-linearity of input/ouput characteristics (current-light intensity characteristics) of a light-emitting element and the non-linearity of input/output characteristics (exposure amount-color density) of the light-sensitive material.

There has been proposed a digital processing system in which color signals are converted into digital signals by sampling them for each of picture elements, and a light emitter for exposure emits light pulse-wisely in correspondence with digital signal values. In such a system, (a) the intensity of emitted light may be set constant while light is emitted for each picture element continuously for the time period corresponding to the value of a digital signal (pulse width modulation: PWM); (b) the intensity of light and the time per emission are set constant and light is emitted for each element for the number of times corresponding to the digital signal value (pulse number modulation: PNM); (c) the emission time is set constant and light is emitted for each element at the intensity corresponding to the digital signal value (pulse amplitude modulation: PAM).

For example, prior art document DE—A—3 033 892 discloses a method similar to pulse amplitude modulation for producing a color image. In this method a repetition pattern formed of primary color regions is provided on a light-sensitive layer, and a laser beam scanning these primary color regions is intensity modulated in the respective color regions corresponding to the amplitude of a video input signal.

In the case of digital processing, non-linear characteristics in color signals and color density of photo-sensitive materials may be conveniently corrected by using a conversion table of correction coefficients so that the non-linearity can be linearized. An interpolation can be made easily in the digital processing for TV video signals as resolution and especially the resolution thereof in the vertical direction is relatively low when the interpolation by forming a new picture element between existing elements is desirable. In the exposure amount control system by the digital processing, where gradations by several hundred steps are needed to obtain high quality picture images, however, the dynamic range of exposure cannot be extended sufficiently to fully express gradation when the amount of exposure light is controlled by merely using the light emission time as in PWM or PNM or the intensity of light as in PAM as parameters. Further, the frequency band of the circuit which drives the light-emitting element becomes wide depending directly on the steps numbers of gradation, and practically, circuit design, assembly and manufacturing will become difficult and costly. Especially in the case of PNM, since the time width for one element is as short as in the range of 4 µs as in video signals of TV, it is not practical, if not impossible, to control several hundred pulses in such a short time. This inventor hit on the idea that if both the light emission time and the intensity of emitted light as parameters are used in controlling the exposure amount, the dynamic range of exposure can be extended and at the same time the frequency band for the driving system can be narrowed.

Although above explanation concerns a color hard-copy, the same is applicble to a monochromatic hard-copy.

The object of the present invention is principally to provide an exposure device suitable for printing out a hard-copy of higher quality of picture images from video signals of TV or the like.

In order to achieve this object the present invention provides an exposure device for hard-copies, comprising a data conversion means which converts three types of electrical color signals of a color picture image into data combining the light emission time with the light intensity, and outputs the electrical signals thereof, a light emitter for signal transmission which emits light at the intensity and for the time period determined by the output data from said data conversion means, and a rotating member for main scanning, said exposure device being characterized by three types of light emitters having different output wavelengths for exposure mounted on the rotating member, at least one photo-receiver for signal transmission which is mounted on said rotating member and receives the light output from said light emitter, converts the same into electrical signals, and transmits said electrical signals to said light emitters for exposing a color photo-sensitive material, a mounting means for photo-sensitive material which is disposed closely around said rotating member to mount said photo-sensitive material, and an auxiliary scanning means which moves at least either said photo-sensitive material or the rotating member in the direction of the axis thereof.

The present invention provides also an exposure device for hard-copies, comprising a data conversion means which converts three types of electrical color signals of a color picture image into data combining the light emission time with the light intensity, and outputs the electrical signals thereof, a light emitter for signal transmission which emits light at the intensity and for the time period determined by the output data from said data conversion means, and a rotating member for main scanning, said exposure device being characterized by three types of light emitters having different output wavelengths for exposure mounted on the rotating member, an exposure controller for controlling light emission of said light emitters, at least one photo-receiver for signal transmission which is mounted on said rotating member and receives the light output from said light emitter, converts the same into electrical signals, and transmits said electrical signals to said exposure controller, a mounting means for photo-sensitive material which is disposed closely around said rotating member to mount a color photo-sensitive material, and an auxiliary scanning means which moves at least either the color photo-sensitive material or the rotating member in the direction of the axis thereof.

This invention can be more fully understood from the following detailed description when taken in conjunction with the accompanying drawings, in which:

Fig. 1 is a block diagram of an embodiment of this invention,

Fig. 2(a), 2(b) and 2(c) show waveforms of light emission patterns within one picture element,

Fig. 3 is a sectional view of a scanning mechanism used in the device of this invention,

Fig. 4 is a front view of a rotating member used in the device of this invention,

Fig. 5 is an explanatory view to show an example of color photo-sensitive material,

Fig. 6 is a perspective view of the exposure device according to this invention, and

Fig. 7A and 7B are explanatory views to respectively show data formats of an optical conversion table in one element.

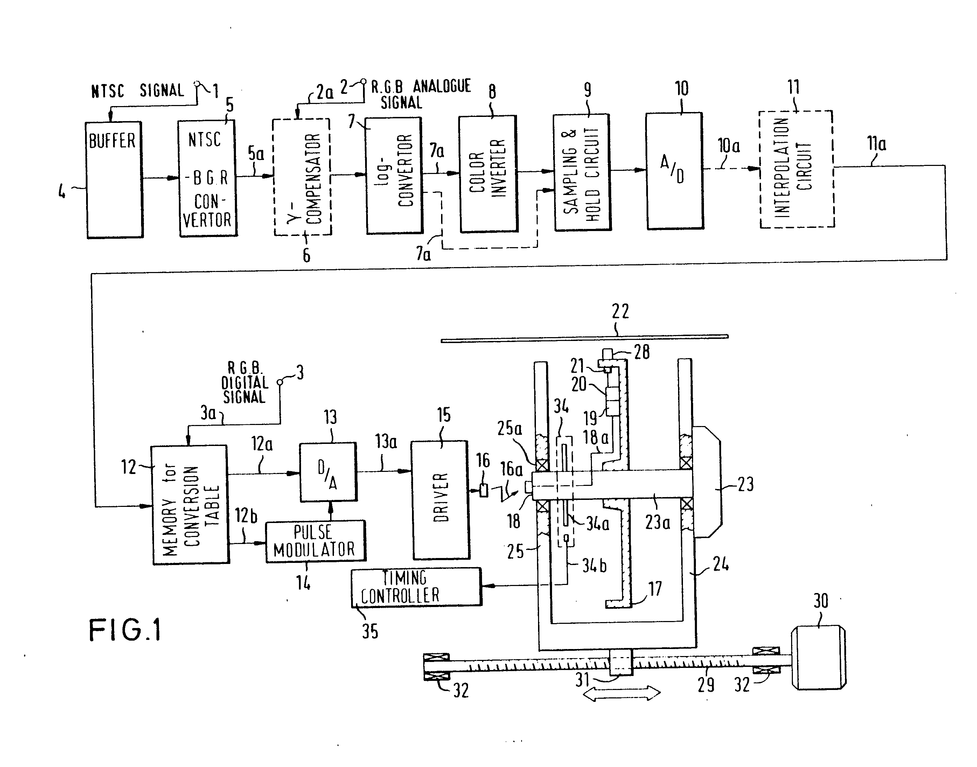

Fig. 1 shows an exposure device according to an embodiment of this invention. The device is adapted to print out hard-copies from NTSC signals obtained from a TV tuner, a video deck, a video camera or a video disk, from R, G, B signals for TV obtained from a microcomputer or a R/G/B TV or from digital color signals obtained from a high-speed digital disk, a frame memory or other digital picture image memories. NTSC signals are input to the first input terminal 1, and R, G, B signals are input to the second input terminal 2, and digital color signals are input to the third input terminal 3.

As NTSC signals are needed to be converted to three color signals R, G, B, they are passed through a buffer 4 to an NTSC/B.G.R. conversion circuit 5 to become R, G, B color signals 5a. As those converted R, G, B color signals 5a are signals for TV system similar to the R, G, B color signals 2a from the second input terminal 2 and are usually raised by 1/γth power, both of R, G, B color signals 5a and 2a are passed through a correction circuit 6 and a log conversion circuit 7 to remove the 1/γth power . After correction of γ, R, G, B signals 7a are inverted by a color inversion circuit 8 if necessary, and fed to a sampling holding circuit 9 and A/D converter 10 to be quantized for each picture element and converted as digital color signals 10a for subsequent digital processing.

The reference numeral 11 denotes an interpolation circuit. As described hereinbefore, video signals of TV are low in resolution both in the horizontal (main scanning) and vertical (auxiliary scanning) directions, and therefore low in picture density. Coarse images are obtained therefore without further processing. It is necessary in practice to add one or more additional picture elements between adjacent elements both in horizontal and vertical directions. More particularly, the number of horizontal scanning lines should be increased. For instance, additional signals for one horizontal scanning may be formed by averaging of two adjacent signals in the vertical direction for each color signal. As the interlaced scanning method is adopted for TV, they are interpolated after they have been converted to the sequential scanning system. The resolution in the horizontal direction (or main scanning direction) may be improved by increasing sampling frequency or consecutively taking an average of two adjacent signals in the horizontal direction for each color signal and inserting it between the signals.

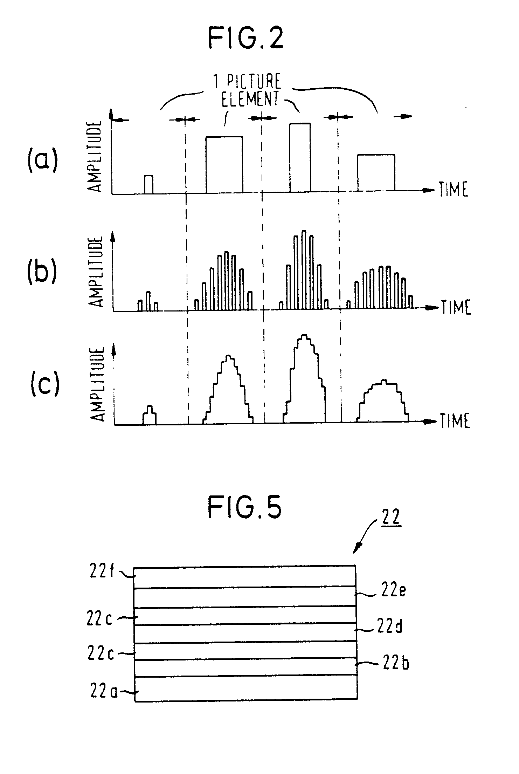

Together with the digital color signals 3a from the third input terminal 3, the digital color signal 11a which has been interpolated is fed to a conversion table memory 12. These digital color signals 11a and 3a express the brightness of each picture element when it is divided into three primaries, which corresponds to the density of each color of each element on the color photo-sensitive material when printed as a hard-copy. The color density of the photo-sensitive material depends on the exposure amount which is determined by multiplying the light emitting time by the intensity of the emitted light. In conversion table (memory) 12, the values of digital color signals correspond to the data which is a combination of emitting time and the intensity of the emitted light. The table 12 is formed taking into consideration the following factors: there is non-linear characteristic between the color density of the photo-sensitive material and the amount of exposure, the photo-sensitive material has spectral sensitivity features; the input/output characteristic of the light emitter for exposure is non-linear, and two non-linear circuits exist during transmission as the control signals for exposure are converted to optical signals, conveyed and then converted again to electric signals after receiving light, according to this invention. Accordingly, the conversion table 12 has different tables for each color, R, G, B, which are respectively corrected to remove those non-linear features when digital signals are converted to the combination of light emitting time and the intensity of the emitted light. The combination of light emitting time and the intensity of the emitted light may be one of the examples shown in Figs. 2(a) through (c), wherein Fig. 2(a) shows an example in which each picture element has one pulse of different amplitudes and times; 2(b) shows an example in which each element has plural pulses of different amplitudes, and 2(c) shows an example in which each element has one pulse of variable amplitude. When amplitude varies within one picture element as shown in Figs. 2(b) and (c), elements adjacent to each other in the horizontal direction can be connected smoothly to avoid Moiré by modifying the amplitudes in portions adjacent to next element. Edge lines can be intensified by increasing the amplitudes in portions adjacent to next elements and each element can be exposed in this way in a manner optimal to the character of picture images simply by selecting a suitable pattern in the table. In forming the table, the step intervals for exposure amount may be set constant, or more dense for the low amount of exposure range and more sparse for the high amount of exposure range or vice versa, and thereby enriched gradation expression can be obtained.

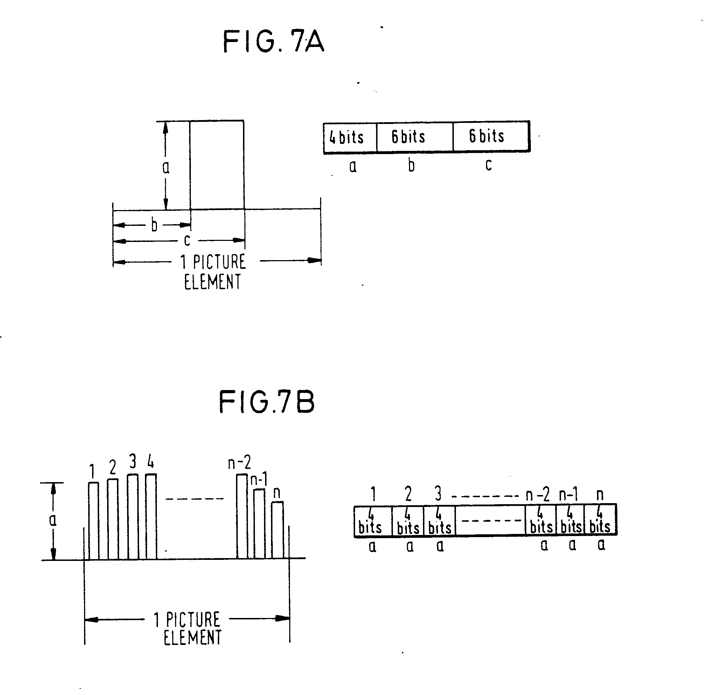

The output data from the conversion table 12 may be, for instance, 16 bits per one element as shown in Fig. 7A wherein the top 4 bits may designate the intensity of emitted light $a$, the next 6 bits the transient built-up time for emission b and the lower 6 bits the last transition time for emission c. The conversion table 12 in this case cyclically outputs the conversion data of respective colors as R→G→B→R→G→B→R.... In other words, it serially ouputs the data for one horizontal scanning. The intensity data 12a of the top four bits is fed to a D/A converter 13 to be converted to an analog value for each element. The time data 12b of the lower 12 bits is fed to the D/A converter 13 via a pulse converter 14 at the same time. In the example shown in Fig. 7B, each element is arbitrarily and equally divided by n, the data of emitted light intensity a is sequentially read out in the number of n from the upper digit in the group of four bits, and converted in D/A to control amplitude as well as time in output. The outputs 13a converted variously as shown in Figs. 2(a) through (c) are thus obtained. Although other circuits such as a buffer memory are needed for the above mentioned digital processing, they are omitted as they are not essential to this invention.

The converted output 13a controlled in amplitude and time is then fed to a driver 15 of a signal transmission light emitter 16, where it is converted to an optical signal 16a.

The optical signal 16a is optically received by a photosensor 18 mounted on the axis of a rotating member 17 to be converted to an electrical signal 18a, and fed to a driver 20 of a light emitter 21 for exposure via an amplifier 19. The light emitter 21 emits light at the intensity and for the time designated by the conversion table 12 to expose a photo-sensitive material 22.

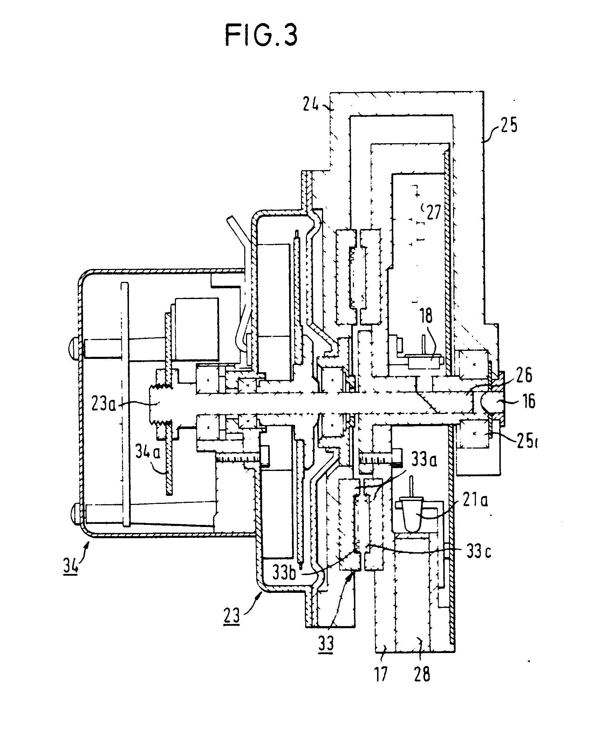

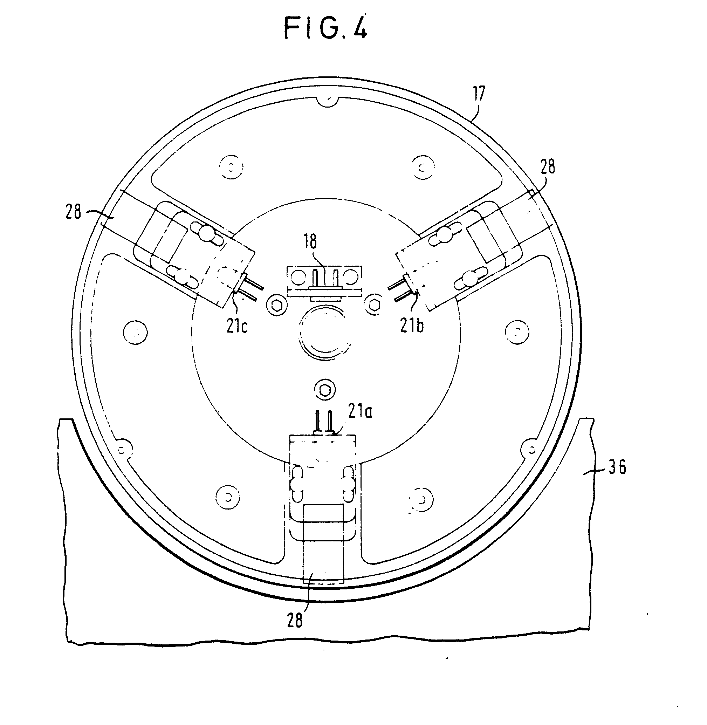

A preferred embodiment of the scanning mechanism and the signal/power transmission mechanism is described hereinafter referring to Figs. 3 and 4. The rotating member 17 is coupled with a rotating axis 23a of a motor 23 and is journaled in a rotatable fashion with bearings 25a of a bearing holder 25 integrally formed on a motor bracket 24. The signal transmission light emitter 16 is fixed at the center of the bearing holder 25, and a prism reflecting mirror 26 is fixed as an optical transmission means on the axis of the rotating member 17 opposing to the light emitter 16. The light reflected by the prism reflecting mirror 26 is received by a photo-sensor 18. The reference numeral 27 is a printed circuit board which is fixed on the rotating member 17 and provided with an amplifier 19 and a driver 20. Three types of light emitters for exposure having different output wavelengths 21a, 21b and 21c are provided at the uniform angle of 120°. Condenser lenses 28 are provided in front of each emitter. The output wavelengths of the light emitters 21a, 21b and 21c are not limited to the three types of R, G, B, but may be selected according to the type and characteristics of the color photo-sensitive material 22. The output wavelength may be set by using a filter.

The rotating member 17 is rotated by the motor 23 for the main scanning and is moved linearly and integrally with the motor 23 by a feed screw 29 for auxiliary scanning. More particularly, the feed screw 29 is driven for revolving by the motor 30, and a female screw member 31 matable therewith is fixed with a motor bracket 24 and a bearing holder 25 integral thereto. The reference numeral 32 denotes a bearing, but a guide for the rotating member 17 for auxiliary scanning is omitted from the illustration. The power source for the rotating member 17 and the amplifier 19 may be a battery, but in this embodiment a rotary transformer 33 is used. The core of the rotary transformer 33 comprises a donut-shaped ferrite core 33a which is divided into two. Each of the two portions is provided in a manner to oppose each other at the interval of a minute distance, for instance, 0.05 mm; one is at the side of the motor bracket 24 and the other at the side of the rotating member 17. The centers of respective ferrite cores 33a are aligned with the center of the rotating axis of the motor 23. The reference numeral 33b denotes a primary coil, and 33c a secondary coil. The output of the secondary coil 33c is rectified to be supplied to each circuit. The rectifier circuit is omitted from the illustration.

The reference numeral 34 denotes a rotary encoder. An encoder disk 34a is fixed on a motor axis 23a and an output 34b therefrom is fed to a timing control circuit 35 to synchronize the revolution of the rotating member 17 with each electrical circuit.

The reference numeral 36 denotes a platen which can mount a color photo-sensitive material 22 along about one third of the outer peripheral of the rotating member 17. It is held with vacuum suction. In this embodiment, the platen 36 is fixed, but the platen 36 may be moved in the direction of auxiliary scanning.

In the above mentioned exposure device for hard-copy the conversion table 12 is adopted to serially output the conversion data for each line for each color R, G, B in the manner of R→G→B→R→G→B→R..., and the circuits extending from the D/A conversion 13 to the driver 20 of the light emitter for the exposure are shared among these colors in order to simplify the structure of the device. The three types of light emitters may therefore be made to emit light by control signals of other colors, but at this moment, as they are not positioned to oppose the light-sensitive material 22, there will be no problem. Needless to say, circuits may be provided separately for respective colors. The driving means for the motor 30 for the auxiliary scanning may be a stepping motor which intermittently moves for one horizontal scanning, or may be an ordinary motor which moves continuously. In the case that the auxiliary scanning is continuous feeding, however, three light emitters for the exposure 21a, 21b and 21c should be provided in deviation from each other in the direction of auxiliary scanning instead of on the same circumference so as to follow the same scanning track for each main scanning.

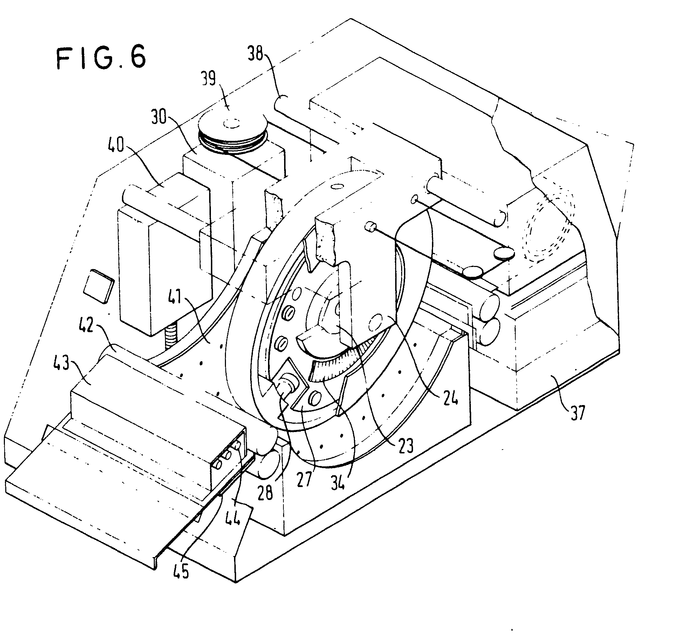

In the case of color photo-sensitive material 22, as the conventional light-emitting diode cannot effectively emit blue light, three types of diodes which can emit green, red and infra-red lights (for example, output wave-lengths of 550, 650 and 750 mμ) may be used in designing the device so that the photo-sensitive layers sensitive to act such lights can produce yellow, magenta and cyan colors respectively. In short, each spectral sensitized layer is exposed by the light corresponding to the spectral region thereof. Fig. 5 shows an example of the layer structures of the photo-sensitive material wherein the reference numeral 22a denotes a support of polyethylene, 22b a cyan color layer, 22c a interlayer, 22d a magenta color layer, 22e a yellow color layer and 22f a protecting layer.

An example of the scanning mechanism is specified as follows:
Scanning Area: A 6 size (150×100 mm)
Scanning line density: 10/mm
Spot diameter: 100 μm
Main scanning revolution: 3,000 rpm
Horizontal scanning frequency: 50 Hz/color
Picture frequency: 225 KHz
Exposure time: 20 sec.

Fig. 6 shows an embodiment of hard-copy device with an exposure device according to this invention. In the figure, the reference numeral 37 denotes a high-frequency oscillator for timing, 38 a guide rail, 39 a wire-type feeding mechanism for auxiliary scanning, 40 a vacuum pump, 41 a vacuum type platen which mounts a thermal-development color photo-sensitive material, 42 a feed roller for feeding to the development section, 43 a thermal type developing section, 44 a far infrared heater, and 45 a rubber heater, and all other reference numerals denote identical parts with other figures.

Description will now be given to the case where the memory for conversion table 12 parallel-outputs the conversion data for respective colors of G, B, R. In this case, three sets of a D/A converter 13, a pulse modulator 14, a driver 15, a signal transmission light emitter 16 and a photo-sensor 18 will be used. If each signal transmission light emitter 16 has the same wavelength, the optical transmission between a light emitter 16 and a photo sensor 18 is separated in space but if they have different wavelengths, the same optical transmission channel will be shared by wavelength multiplex and the transmitted light is separated with a filter on the side of a photo-sensor 18. As three sets of a photo-sensor 18, and a subsequent amplifier 19 and a driver 20 are used, the device may be structured by collecting three types of light emitters 21a, 21b and 21c and their condenser lenses 28 at one position so that each light be projected to one point. In this case, the time required for printing out a hard-copy can be shortened drastically.

The above description has been given to the case of color hard-copies, but it may be converted to an exposure device for monochromatic copies simply by using illuminance signals instead of three color signals and using only one type of conversion table and light emitter for exposure.

As described in the foregoing, the following advantages can be obtained by this invention:

(1) As a light emitter such as a light emitting diode or a laser diode is driven by amplitude modulation as well as pulse modulation, the dynamic range of exposure can be widely reserved, thereby achieving various and delicate expression in gradation.

(2) For the extensive expression in gradation, the frequency band in the signal transmission system is limited in width, facilitating circuit design and manufacturing.

(3) as light emission patterns in one element can be controlled by a conversion table, it is easy and simple to prevent Moiré and to enhance edge lines.

(4) As picture elements can be easily interpolated, delicate and minute expression of a picture is possible.

(5) As several types of conversion tables may be prepared, correction in various of gradation and γ correction types can be freely attained.

(6) As scanning and exposure are conducted by using a rotating member, mechanism can be constructed to be simple.

(7) As optical signals are used for transmission between rotating members and fixed members, a higher reliability free of contact can be achieved in transmission.

**Claims**

1. An exposure device for hard-copies, comprising a data conversion means (9, 10) which converts three types of electrical color signals of a color picture image into data combining the light emission time with the light intensity, and outputs the electrical signals thereof,

a light emitter (16) for signal transmission which emits light at the intensity and for the time period determined by the output data from said data conversion means (9, 10), and

a rotating member (17) for main scanning, characterized by

three types of light emitters (21a, 21b, 21c) having different output wavelengths for exposure mounted on the rotating member (17),

at least one photo-receiver (18) for signal transmission which is mounted on said rotating member (17) and receives the light output from said light emitter (16), converts the same into electrical signals, and transmits said electrical signals to said light emitters (21a, 21b, 21c) for exposing a color photo-sensitive material (22),

a mounting means (36) for photo-sensitive material which is disposed closely around said rotating member (17) to mount said photo-sensitive material (22), and

an auxiliary scanning means (31) which moves at least either said photo-sensitive material (22) or the rotating member (17) in the direction of the axis thereof.

2. An exposure device for hard-copies, comprising a data conversion means (9, 10) which converts three types of electrical color signals of a color picture image into data combining the light emission time with the light intensity, and outputs the electrical signals thereof,

a light emitter (16) for signal transmission which emits light at the intensity and for the time period determined by the output data from said data conversion means (9, 10), and

a rotating member (17) for main scanning, characterized by

three types of light emitters (21a, 21b, 21c) having different output wavelengths for exposure mounted on the rotating member (17),

an exposure controller (19, 20) for controlling light emission of said light emitters (21a, 21b, 21c),

at least one photo-receiver (18) for signal transmission which is mounted on said rotating member (17) and receives the light output from said light emitter (16), converts the same into electrical signals, and transmits said electrical signals to said exposure controller (19, 20),

a mounting means (36) for photo-sensitive material which is disposed closely around said rotating member (17) to mount a color-sensitive material (22), and

an auxiliary scanning means (31) which moves at least either the color photo-sensitive material (22) or the rotating member (17) in the direction of the axis thereof.

3. An exposure device according to claim 2, characterized by a rotary transformer (33) for supplying power to said exposure controller (19, 20) and said light emitters (21a, 21b, 21c) for exposing said photo-sensitive material (22), components of said rotary transformer (33) being disposed respectively on and oppositely to said rotating member (17).

**Patentansprüche**

1. Belichtungsvorrichtung zur Herstellung von dauerhaften Kopien, umfassend eine Datenwändlereinrichtung (9, 10), welche drei Arten elektrischer Farbsignale eines (einer) Farbbilds oder -abbildung in die Lichtemissionszweit mit der Lichtintensität kombinierende Daten umwandelt und die elektrischen Signale davon ausgibt,

ein Lichtemissionselement (16) für Signalübertragung, welches Licht mit der durch die Ausgabedaten von der Datenwandlereinrichtung (9, 10) bestimmten Intensität und Zeitdauer emittiert, und

ein rotierendes Element (17) für Hauptabtastung, gekennzeichnet durch

drei Arten von am rotierenden Element (17) montierten Lichtemissionselementen (21a, 21b, 21c) mit unterschiedlichen Ausganswellenlängen für Belichtung,

mindestens einen Lichtempfänger (18) für Signalübertragung, der am rotierenden Element (17) montiert ist und das vom Lichtemissionselement (16) abgegebene Licht empfängt, das Licht in elektrische Signale umwandelt und die elektrischen Signale für die Belichtung eines lichtempfindlichen Farb(aufzeichnungs) materials (22) zu den Lichtemissionselementen (21a, 21b, 21c) überträgt,

eine dicht um das rotierende Element (17) herum angeordnete Trageinheit (36) für lichtempfindliches Material zum Tragen oder Haltern des lichtempfindlichen Materials (22) und

eine Hilfsabtasteinheit (31), die zumindest entweder das lichtempfindliche Material (22) oder das rotierende Element (17) in Richtung ihrer Achse zu bewegen vermag.

2. Belichtungsvorrichtung zur Herstellung von dauerhaften Kopien, umfassend eine Datenwandlereinrichtung (9, 10), welche drei Arten elektrischer Farbsignale eines (einer) Farbbilds oder -abbildung in die Lichtemissionszeit mit der Lichtintensität kombinierende Daten umwandelt und die elektrischen Signale davon ausgibt,

ein Lichtemissionselement (16) für Signalübertragung, welches Licht mit der durch die Ausgabedaten von der Datenwandlereinrichtung (9, 10) bestimmten Intensität und Zeitdauer emittiert, und

ein rotierendes Element (17) für Hauptabtastung, gekennzeichnet durch

drei Arten von am rotierenden Element (17) montierten Lichtemissionselementen (21a, 21b, 21c) mit unterschiedlichen Ausgangswellenlängen für Belichtung,

eine Belichtungsregeleinrichtung (19, 20) zum Regeln der Lichtemission der Lichtemissionselemente (21a, 21b, 21c),

mindestens einen Lichtempfänger (18) für Signalübertragung, der am rotierenden Element (17) montiert ist und das vom Lichtemissionselement (16) abgegebene Licht empfängt, das Licht in eletrische Signale umwandelt und die elektrischen Signale zur Belichtungsregeleinrichtung (19, 20) überträgt,

eine dicht um das rotierende Element (17) herum angeordnete Trageinheit (36) für lichtempfindliches Material zum Tragen oder Haltern eines farbempfindlichen Materials (22) und

eine Hilfsabtasteinheit (31), die zumindest entweder das lichtempfindliche Farb(aufzeichnungs) material (22) oder das rotierende Element (17) in Richtung ihrer Achse zu bewegen vermag.

3. Belichtungsvorrichtung nach Anspruch 2, gekennzeichnet durch einen Dynamotor oder Drehtransformator (33) zur Lieferung von Strom zur Belichtungsregeleinrichtung (19, 20) und zu den Lichtemissionselementen (21a, 21b, 21c) für die Belichtung des lichtempfindlichen Materials (22), wobei Bauteiwe des Dynamotors oder Drehtransformators (33) am rotierenden Element (17) bzw. in Gegenüberstellung zu diesem angeordnet sind.

**Revendications**

1. Un dispositif d'exposition pour le tirage de fac-sims, comprenant:

—des moyens de conversion de données (9, 10) convertissant trois types de signaux couleur électriques d'un cliché d'image couleur en données combinant la durée d'émission lumineuse avec l'intensité lumineuse, et qui délivre en sortie des signaux électriques représentant ces paramètres,

—une source lumineuse (16) d'émission d'un signal, qui émet de la lumière avec l'intensité et la durée déterminées par les don données en sortie des moyens de conversion de données (9, 10), et

—un élément tournant (17) pour le balayage principal, caractérisé par:

—trois types de sources lumineuses d'exposition (21a, 21b, 21c) ayant différentes longueurs d'onde de sortie, montées sur l'élément tournant (17),

—au moins un photodétecteur (18) d'émission d'un signal, monté sur l'élément tournant (17), qui reçoit le signal lumineux en sortie de la source lumineuse (16), convertit celui-ci en signaux électriques, et émet ces signaux électriques vers les sources lumineuses (21a, 21b, 21c) pour l'exposition d'un support photosensible couleurs (22),

—des moyens de mise en place (36) du support photosensible, placés autour de l'élément tournant (17) et à proximité de celui-ci, et permettant la mise en place du support photosensible (22), et

—des moyens de balayage auxiliaire (31) déplaçant au moins l'un des deux éléments constitués par le support photosensible (22) et l'élément tournant (17) dans la direction de l'axe de ce dernier.

2. Un dispositif d'exposition pour le tirage de fac-sims comprenant:

—des moyens de conversion de données (9, 10) convertissant trois types de signaux couleur électriques d'un cliché d'image couleur en données combinant la durée d'émission lumineuse avec l'intensité lumineuse, et qui délivre en sortie des signaux électriques représentant ces paramètres,

—une source lumineuse (16) d'émission d'un signal, qui émet de la lumière avec l'intensité et la durée déterminées par les données en sortie des moyens de conversion de données (9, 10), et

—un élément tournant (17) pour le balayage principal, caractérisé par:

—trois types de sources lumineuses d'exposition (21a, 21b, 21c) ayant différentes longueurs d'onde de sortie, montées sur l'élément tournant (17),

—des moyens de commande d'exposition (19, 20) permettant de commander l'émission lumineuse des sources lumineuses (21a, 21b, 21c),

—au moins un photodétecteur (18) d'émission d'un signal, monté sur l'élément tournant (17), qui reçoit le signal lumineux en sortie de la source lumineuse (16), convertit celui-ci en signaux électriques, et émet ces signaux électriques vers les moyens de comnande d'exposition (19, 20),

—des moyens de mise en place (36) du support photosensible, placés autour de l'élément tournant (17) et à proximité de celui-ci, et permettant la mise en place d'un support photosensible couleurs (22), et

—des moyens de balayage auxiliaire (31) déplaçant au moins l'un des deux éléments constitués par le support photosensible couleurs (22) et et l'élément tournant (17) dans la direction de l'axe de ce dernier.

3. Le dispostif de la revendication 2, caractérisé par un transformateur rotatif (33) permettant d'alimenter les moyens de commande d'exposition (19, 20) et les sources lumineuses (21a, 21b, 21c) pour l'exposition du support photosensible (22), les composants de ce transformateur tournant (33) étant disposés respectivement sur l'élément tournant (17) et face à celui-ci.

FIG.1

NTSC SIGNAL — 1 · R.G.B ANALOGUE SIGNAL

BUFFER — 4

NTSC -B.G.R CON-VERTOR — 5

γ-COMPENSATOR — 6 · 2a 2

log-CONVERTOR — 7

COLOR INVERTER — 8

SAMPLING & HOLD CIRCUIT — 9

A/D — 10

INTERPOLATION CIRCUIT — 11 · 11a

5a · 7a · 7a · 10a

R.G.B. DIGITAL SIGNAL — 3 · 3a

MEMORY for CONVERSION TABLE — 12 · 12a · 12b

D/A — 13 · 13a

DRIVER — 15 · 16 · 16a

PULSE MODULATOR — 14

TIMING CONTROLLER — 35

22 · 28 · 21 · 20 · 19 · 18a · 25a · 34 · 18 · 34a · 23 · 23a · 25 · 34b · 17 · 24 · 30 · 31 · 29 · 32

# FIG.2

# FIG.5

# FIG.3

# FIG. 4

# FIG.6

# FIG. 7A

# FIG. 7B